# FASCICULE DE BREVET EUROPEEN

(11) **EP 3 592 520 B1**
(45) Date de publication et mention de la délivrance du brevet: **07.06.2023**
(21) Numéro de dépôt: 18712979.6
(22) Date de dépôt: 08.03.2018
(51) Int. Cl.: B28B 1/00, E04B 1/35, E04G 21/04, B33Y 70/00, B33Y 30/00

(54) **IMPRIMANTE 3D BÉTON**
3D-BETONDRUCKER
3D CONCRETE PRINTER

(30) Priorité: 09.03.2017 FR 1751938
(43) Date de publication de la demande: 15.01.2020
(73) Titulaire: Université Clermont Auvergne, 63000 Clermont-Ferrand (FR)
(72) Inventeur: GODI, Gaël, 63540 Romagnat (FR); PHELIPPE, Laurent, 63100 Clermont-Ferrand (FR); AMZIANE, Sofiane, 63000 Clermont-Ferrand (FR)
(74) Mandataire: Novagraaf Technologies
(86) Numéro de dépôt international: PCT/FR2018/050542
(87) Numéro de publication internationale: WO 2018/162858

(56) Documents cités:
- DE-A1-102014 015 335
- FR-A1- 3 029 811

## Description

### Domaine technique

La présente invention se rapporte à l'impression de structures par dépôt de matières telles que du mortier.

Plus précisément, l'invention concerne un dispositif, un système ainsi qu'un procédé d'impression 3D de structures par dépôt de matière.

### État de la technique

L'impression tridimensionnelle permet de produire un objet réel par des procédés de fabrication additive, c'est-à-dire par le dépôt successif de couches de matière.

Initialement utilisée pour le prototypage rapide d'objets, l'impression 3D est maintenant utilisée pour la fabrication de pièces fonctionnelles et cela dans des domaines variés comme la construction de bâtiment ou d'édifices.

L'intérêt de l'impression 3D pour la construction de bâtiments est la réduction de 30 à 60% des déchets de construction et un raccourcissement des délais de production de 50 à 70% par rapport à un procédé classique.

Actuellement, il existe plusieurs types de technologies pour la construction de bâtiments. Certaines technologies utilisent des systèmes de portique coulissant sur des rails qui soutiennent la tête d'impression de l'imprimante et qui encadrent la zone de construction. Ce sont des mises à l'échelle d'imprimante 3D de « petite taille » utilisées généralement pour l'impression d'objets en plastiques ou métaux de « petite taille ». L'inconvénient de ce type de technologie est l'encombrement et la nécessité d'avoir une structure de grande taille qui englobe le bâtiment à « imprimer ».

Pour résoudre ce problème, un autre type d'imprimantes 3D pour le bâtiment utilise un bras robotisé permettant à l'imprimante 3D de se déplacer au centre de la zone de construction et d'éviter l'installation d'un portique et de rails.

Pour s'affranchir des limites précitées causées par l'utilisation d'un bras robotisé ou d'un portique coulissant sur des rails, en termes de hauteur et de périmètre d'action, de nouveaux systèmes d'impression 3D sont apparus et permettent à présent de se fixer à une grue, de type structure en treillis. Ces systèmes sont volumineux, lourds et leur installation est complexe car elle demande en général d'adapter le système de fixation de la grue pour chaque système d'impression. De plus, ce genre d'imprimante pose des problèmes de stabilité et d'énergie déployée pour pomper le matériau à déposer jusqu'au sommet de la grue et de la tête d'impression.

Il existe donc un réel besoin d'un système d'impression palliant ces défauts, inconvénients et obstacles de l'art antérieur, en particulier d'un dispositif permettant de maîtriser les conditions d'impression de la structure à imprimer, notamment la position de la tête d'impression, de réduire les coûts de main d'oeuvre et le temps d'installation d'un tel dispositif sur une grue standard dotée d'un crochet.

DE 10 2014 015335 A1 divulgue un dispositif d'impression 3D mobile par ajout de matière suivant le préambule de la revendication 1.

### Description de l'invention

Pour résoudre un ou plusieurs des inconvénients cités précédemment, l'invention a pour objet un dispositif d'impression 3D mobile par ajout de matière destiné à être accroché à un dispositif de levage à câble ou chaîne unique de levage, le dispositif d'impression 3D mobile comprenant :
- une tête d'impression adaptée pour recevoir de la matière et la déposer ;
- des moyens de fixation adaptés pour relier la tête d'impression au dispositif de levage ; et
- des moyens de stabilisation adaptés pour stabiliser la position de la tête d'impression par effet gyroscopique.

Ces moyens de stabilisation permettent ainsi de maîtriser la position de la tête d'impression malgré les perturbations extérieures comme le vent, notamment lorsque la tête d'impression est suspendue à un câble.

Avantageusement, les moyens de stabilisation sont adaptés pour agir sur la position des moyens de fixation. En compensant les variations de position inopinées des moyens de fixation, par exemple un crochet de grue auquel le dispositif d'impression pourrait être accroché, les efforts à mettre en oeuvre pour contrôler ensuite la position de la tête d'impression elle-même sont minimisés.

D'après l'invention, les moyens de stabilisation comprennent au moins trois gyroscopes, adaptés pour stabiliser la position de la tête d'impression par effet gyroscopique, permettant d'augmenter la fiabilité du système de stabilisation.

Avantageusement, pour augmenter la stabilité en cas d'utilisation du dispositif d'impression dans des conditions environnementales présentant de fortes perturbations, les moyens de stabilisation peuvent comprendre des moyens de stabilisation complémentaire comprenant au moins trois turbines adaptées pour stabiliser la position de la tête d'impression par écoulement d'air, les trois turbines étant réparties à équidistance angulairement d'un axe de levage sensiblement vertical (V) défini par le câble ou la chaîne unique de levage du dispositif de levage.

Le dispositif inclut aussi un actionneur adapté pour faire tourner la tête d'impression autour d'un axe de rotation dit vertical (V) perpendiculaire au plan défini par les trois gyroscopes, de manière à donner un premier degré de liberté à la tête d'impression, à savoir une rotation, les moyens de stabilisation étant adaptés pour compenser les perturbations générées par la rotation de la tête d'impression et assurer la stabilité de la tête d'impression pendant la rotation.

Avantageusement, le dispositif peut inclure des moyens de déplacement comprenant un premier système de translation adapté pour déplacer la tête d'impression le long d'un axe (H) perpendiculaire à l'axe vertical (V) et permettant ainsi à la tête d'impression d'avoir un second degré de liberté, une translation. Dans ce cas là, le premier système de translation peut comprendre une masse d'équilibrage adaptée pour maintenir l'équilibre du premier système de translation en fonction de la position de la tête d'impression sur l'axe (H) du premier système de translation. Cette masse permet ainsi d'éviter au système de translation horizontale de pencher à cause du poids de la tête d'impression et donc de garder horizontal le système de translation horizontale.

De sorte à rendre le dispositif d'impression 3D mobile le plus compact possible, le premier système de translation peut être composé d'un bras articulé permettant le déplacement de la tête d'impression le long de l'axe (H) perpendiculaire à l'axe vertical (V).

Afin de donner à la tête d'impression un troisième degré de liberté, en l'espèce une seconde translation, les moyens de déplacement peuvent comprendre en outre un second système de translation adapté pour déplacer la tête d'impression le long de l'axe vertical (V).

Pour pouvoir automatiser l'impression d'une structure, le dispositif d'impression 3D mobile peut comprendre en outre :
- des moyens de localisation adaptés pour déterminer en temps réel la position de la tête d'impression dans un repère géométrique propre à la structure à imprimer ; et
- une unité de traitement adaptée pour asservir la position de la tête d'impression en fonction de sa localisation dans le repère géométrique de la structure à imprimer.

Avantageusement, les moyens de localisation comprennent :
- un système de repérage adapté pour connaître la position absolue d'un point de référence dans le repère géométrique de la structure à imprimer ; et
- un ensemble de capteurs adaptés pour permettre de localiser la position de la tête d'impression par rapport au point de référence,
l'unité de traitement étant adaptée pour calculer la position de la tête d'impression dans le repère géométrique de la structure à imprimer grâce aux données du système de repérage et aux données de l'ensemble des capteurs.

Selon des modes de réalisation particuliers, utilisables seuls ou en combinaison :
- la tête d'impression est connectée à un tube d'alimentation de matière, telle que du mortier, dont l'arrivée se fait selon l'axe vertical (V), ce qui permet de réduire l'influence de l'arrivée de la matière sur le dispositif comme l'effet de balancement. Dans ce cas là, le tube d'alimentation de mortier peut être relié à une pompe à béton comprenant un tube de sortie, les deux tubes étant reliés par une combinaison de joints tournants, de manière à éviter les frottements risquant de faire tourner le dispositif autour de l'axe vertical (V), ou autour du crochet dans le cas où le dispositif serait suspendu à un crochet de grue ;
- la tête d'impression peut être munie d'une buse tournante permettant un dépôt non rectiligne de la matière, et par conséquent de renforcer et rigidifier la structure à imprimer.

Dans un second aspect, l'invention porte aussi sur un système d'impression 3D pour la construction d'une structure par dépôt de couches de matière comprenant :
- un dispositif d'impression 3D mobile selon l'un des modes de réalisation décrits ci-dessus ; et
- un dispositif de levage apte à suspendre et déplacer le dispositif d'impression 3D.

Un autre aspect de l'invention se rapporte à un procédé d'impression 3D d'une structure, telle qu'un bâtiment, par un système d'impression tel que décrit précédemment, comprenant :
- une première étape consistant à définir, à l'aide des moyens de localisation, au moins un point de référence dans le repère géométrique de la structure à imprimer , de sorte que l'unité de traitement puisse définir la position de la tête d'impression dans le repère géométrique de la structure à imprimer ; et
- une seconde étape d'impression de la structure consistant à alimenter la tête d'impression en matériaux de construction, de type béton ou mortier ou ciment, et à activer l'asservissement de la position de la tête d'impression par l'unité de traitement en fonction de la forme de la structure à imprimer.

### Brève description des figures

L'invention sera mieux comprise à la lecture de la description qui suit, faite uniquement à titre d'exemple, et en référence aux figures en annexe dans lesquelles :
- La figure 1 représente une vue d'ensemble d'un dispositif d'impression selon un mode général de réalisation de l'invention ;
- La figure 2 représente une vue d'ensemble d'un dispositif d'impression selon une première variante du mode de réalisation général de l'invention ;
- La figure 3 représente une vue d'ensemble d'un dispositif d'impression selon une deuxième variante du mode de réalisation général de l'invention ;
- La figure 4 représente une vue d'ensemble d'un dispositif d'impression selon une troisième variante du mode de réalisation général de l'invention ;
- Les figures 5 et 6 représentent des vues de profil du dispositif d'impression selon la troisième variante du mode de réalisation général de l'invention ;
- La figure 7 représente une vue de dessus du dispositif d'impression selon la troisième variante du mode de réalisation général de l'invention ;
- La figure 8 représente un exemple de système de repérage de point de référence dans le repère géométrique de la structure à imprimer ;
- La figure 9 représente la nomenclature adoptée pour les angles de rotation autour des axes du repère du dispositif d'impression ;
- La figure 10 représente une quatrième variante du mode de réalisation général de l'invention ;
- Les figures 11a à 11c représentent des moyens de stabilisation complémentaire selon un premier mode de réalisation ; et
- Les figures 12a à 12c représentent des moyens de stabilisation complémentaire selon un deuxième mode de réalisation.

### Définitions

Dans la suite de la description, on entend par dispositif de levage un dispositif de levage de type grue, pont roulant ou en encore chariot de levage télescopique comprenant un câble ou une chaîne unique de levage.

Le câble ou la chaîne unique de levage définissent un axe de levage sensiblement vertical.

Dans le cas où le câble ou la chaîne unique de levage sont mouflés, c'est-à-dire dans le cas où le câble ou la chaîne unique de levage passent par plusieurs poulies pour décupler les forces de levage, l'axe de levage correspond à l'axe médian résultant.

### Modes de réalisation

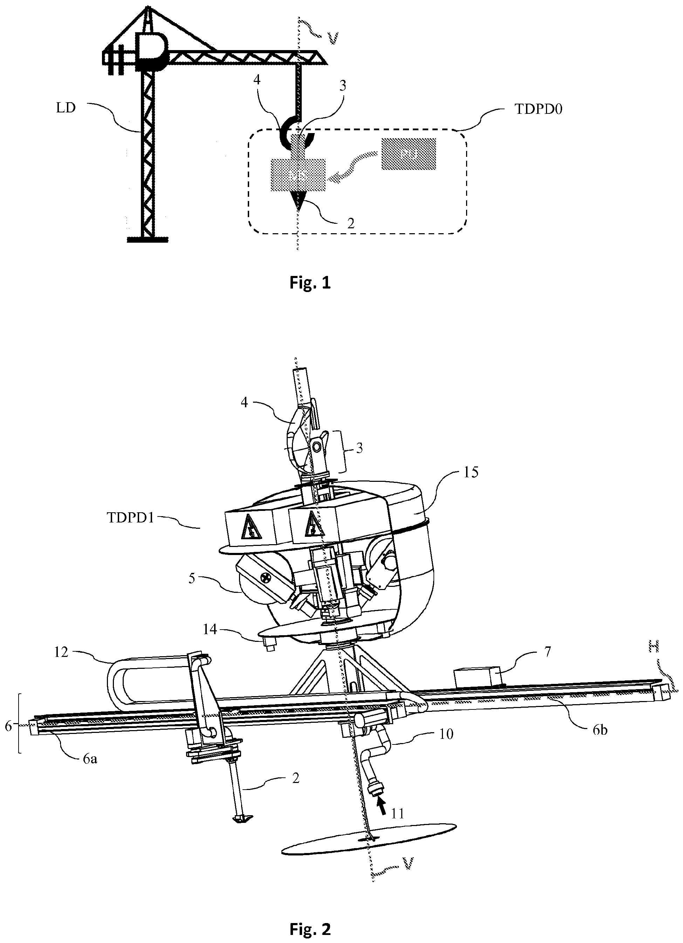

Selon la **figure 1** qui représente un mode de réalisation général de l'invention, le dispositif d'impression tridimensionnelle (3D) mobile TDPD0 par ajout de matière comprend :
- une tête d'impression 2 adaptée pour recevoir de la matière, telle que du mortier ou du béton, et la déposer ;
- des moyens de fixation 3 adaptés pour relier la tête d'impression 2 à un dispositif de levage LD, et
- des moyens de stabilisation MS adaptés pour stabiliser la position de la tête d'impression 2 par effet gyroscopique .

Afin d'être facilement utilisables, les moyens de fixation 3 du dispositif d'impression TDPD0 sont adaptés aux dispositifs de levage standards de type grue, pont roulant ou en encore chariot de levage télescopique. En particulier, les moyens de fixation 3 du dispositif sont compatibles avec les systèmes d'accrochage de ces dispositifs de levage tels un crochet de grue 4, de manière à ce qu'aucun ajustement particulier du dispositif de levage n'ait à être réalisé pour la mise en place du dispositif d'impression mobile TDPD0. Par exemple, les moyens de fixation comprennent un anneau dans lequel le crochet de grue 4 du dispositif de levage LD vient s'accrocher.

Ainsi le dispositif d'impression mobile TDPD0 peut être suspendu à un câble (ou une chaîne) de grue, c'est-à-dire une structure non ou peu rigide, à l'aide d'un crochet de grue 4 et de ses moyens de fixation 3.

De façon inhérente à un tel montage, sur une structure non ou peu rigide, le dispositif d'impression mobile TDPD0 peut être soumis à différentes perturbations. Dans le cadre de la construction d'un bâtiment ces perturbations peuvent venir des perturbations environnementales (exemple : le vent), des forces générées par l'apport de matière jusqu'à la tête d'impression 2, de la réaction de la matière lors de sa dépose, ou encore de l'effet de « ressort » du câble de la grue.

Afin de maîtriser le dépôt de matière, il est nécessaire de stabiliser la position de la tête d'impression 2 par laquelle sort effectivement la matière. Cette stabilisation est réalisée à l'aide des moyens de stabilisation MS, qui peuvent agir directement sur la tête d'impression 2. Cependant, les inventeurs ont relevé qu'il pouvait être particulièrement avantageux que les moyens de stabilisation MS agissent sur la position des moyens de fixation 3.

En effet, la stabilisation étant assurée par effet gyroscopique, plus celle-ci sera appliquée près du point le plus sensible aux perturbations, comme sur la **figure 2****,** moins il faudra déployer de forces pour compenser les perturbations. Dans la mesure du possible, il est donc intéressant que les moyens de stabilisation MS agissent sur la position des moyens de fixation 3, le reste du dispositif TDPD0 ayant une inertie et une stabilité intrinsèque beaucoup plus importante que celle d'un crochet de grue 4 suspendue au bout d'un câble ou d'une chaîne.

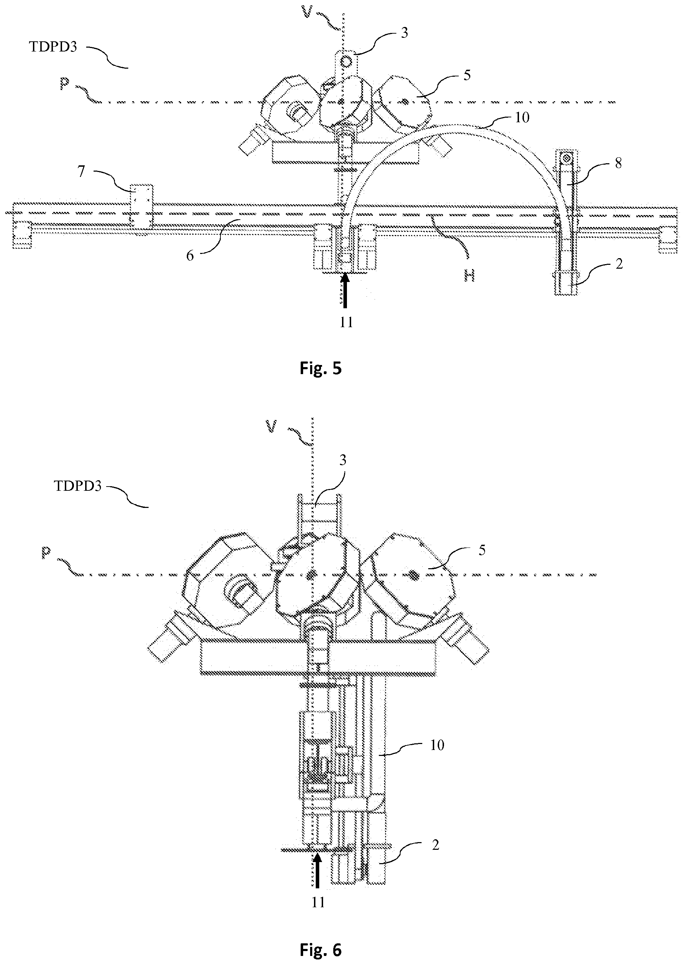

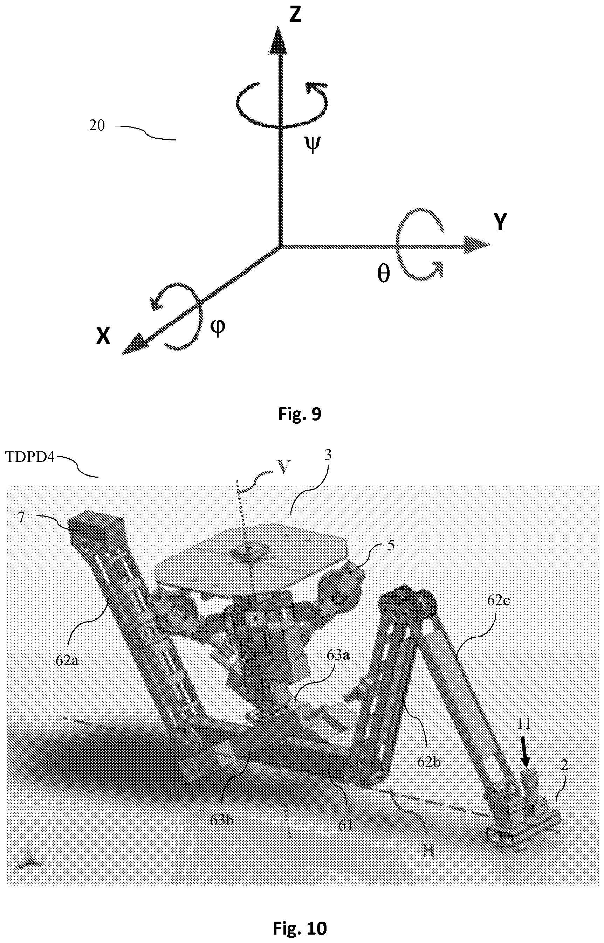

Les **figures 2 à 7** ainsi que la **figure 10** représentent un dispositif d'impression conforme à différentes variantes TDPD1, TDPD2, TDPD3 et TDPD4 du mode de réalisation général de l'invention, dans lequel les moyens de stabilisation MS comprennent au moins trois gyroscopes 5 adaptés pour stabiliser la position de la tête d'impression 2 par effet gyroscopique. Pour des raisons de sécurité et aussi pour un bon équilibre du dispositif, un quatrième gyroscope peut être utilisé de manière à pouvoir assurer la stabilité de la tête d'impression 2, comme illustré dans les **figures 2 à 7****.**

Selon un mode de réalisation particulier, les quatre gyroscopes 5 sont positionnés dans un même plan P et fonctionnent de manière symétrique, deux à deux, de manière à contrôler le tangage et le roulis du plan P défini par le centre des gyroscopes, et de sorte que la tête d'impression 2 reste dans un plan horizontal par rapport au sol malgré les perturbations. Les **figures 2 à 7** illustrent un tel type de montage.

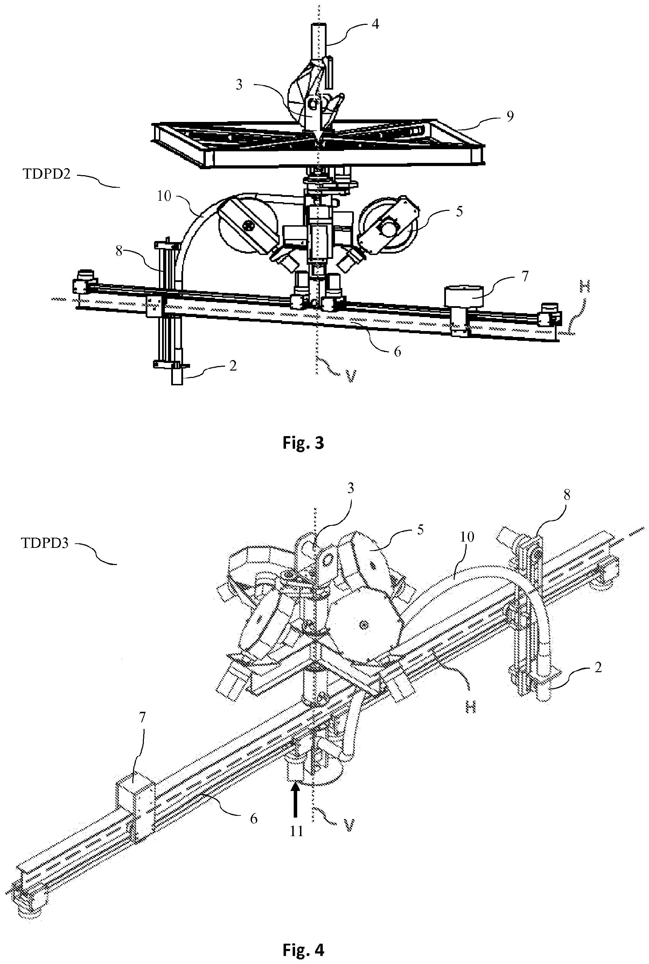

Avantageusement, les gyroscopes peuvent être inclinés par rapport à l'axe vertical V ce qui améliore la stabilité de l'ensemble, comme illustré dans les **figures 4 à 7****.** L'axe vertical (V) correspond à l'axe de levage sensiblement vertical défini par le câble ou la chaîne de levage unique du dispositif de levage LD.

D'après l'invention, le dispositif TDPD0, TDPD1, TDPD2, TDPD3 ou TDPD4, comprend un actionneur adapté pour faire tourner la tête d'impression 2 autour d'un axe de rotation, dit vertical V perpendiculaire au plan défini par les trois (ou quatre) gyroscopes 5 de manière à permettre à la tête d'impression 2 d'avoir un premier degré de liberté, à savoir une rotation autour de l'axe vertical V. La rotation de la tête d'impression 2 pouvant générer des perturbations, les moyens de stabilisation doivent être adaptés pour compenser ces perturbations et assurer la stabilité de la tête d'impression pendant la rotation. Ils doivent notamment produire un couple de réaction qui permet de vaincre l'inertie du dispositf d'impression lors de la rotation de la tête d'impression. Comme indiqué précédemment, cet axe de rotation ou axe vertical V correspond à l'axe de levage sensiblement vertical défini par le câble ou la chaîne de levage unique du dispositif de levage LD.

Avantageusement, cet actionneur peut s'appuyer sur les trois (ou quatre) gyroscopes 5 pour réaliser cette rotation.

Dans la **figure 2****,** le couple produit par les gyroscopes 5 va permettre d'annuler le couple induit par la mise en rotation de la tête d'impression 2. L'ensemble avec les gyroscopes 5 ne tournera pas, mais le couple produit par les gyroscopes 5 aura permis de mettre en rotation ce qui est dessous à savoir la tête d'impression 2. Cela permet, entre autre, de ne pas faire tourner le crochet de grue sur lequel peut être fixé le dispositif et de stabiliser la position de la tête d'impression 2 pendant sa rotation.

Dans les dispositifs TDPD2 et 3 représentés dans les **figures 3 à 7****,** c'est le couple produit par les gyroscopes 5 qui va permettre directement de mettre en rotation l'ensemble rigide dont ils font partie, comprenant la tête d'impression 2. Dans ces deux configurations, TDPD2 et TDPD3, l'actionneur est principalement composés des gyroscopes 5.

Selon une autre option, le dispositif d'impression mobile TDPD0, TDPD1, TDPD2, TDPD3 ou TDPD4 peut inclure également des moyens de déplacement comprenant un premier système de translation 6 adapté pour déplacer la tête d'impression 2 le long d'un axe H perpendiculaire à l'axe vertical V, soit dans plan parallèle au plan P. Afin d'assurer l'équilibre du premier système de translation 6, celui-ci peut comprendre une masse d'équilibrage 7 adaptée pour maintenir l'équilibre du premier système de translation 6 en fonction de la position de la tête d'impression 2 sur l'axe H du premier système de translation 6, comme illustré sur les **figures 2 à 7****.**

Dans le cas de la **figure 2****,** le premier système de translation 6 comprend une première et une deuxième poutre rectiligne, 6a et 6b, parallèles entre elles. La tête d'impression 2 se déplace le long de la première poutre 6a, alors que la masse d'équilibrage 7 se déplace le long de la deuxième poutre 6b. L'utilisation de deux poutres permet d'augmenter l'amplitude du déplacement en translation de la tête d'impression (au plus proche possible de l'axe de rotation vertical V du dispositif) et donc le rayon d'action du dispositif TDPD1.

Ainsi, quand la tête d'impression 2 s'éloigne de l'axe vertical V, la masse d'équilibrage 7, s'éloigne aussi de l'axe vertical V et réciproquement lorsque la tête d'impression 2 se rapproche de l'axe vertical V. Par ailleurs, il peut être avantageux, en phase de stabilisation, de mouvoir à la fois la tête d'impression 2 et la masse d'équilibrage 7 en tandem (i.e. dans le même sens) pour lutter ponctuellement contre un ballant excessif du dispositif.

Dans le cas de la **figure 10**, le premier système de translation 6 comprend un bras articulé permettant le déplacement de la tête d'impression 2 le long de l'axe H perpendiculaire à l'axe vertical V. Ce montage permet de réduire au maximum l'encombrement du dispositif d'impression TDPD4.

Dans cet exemple, le bras articulé est composé d'une poutre centrale 61, de bras secondaires et d'au moins deux vérins 63a et 63b.

A une première extrémité de la poutre centrale 61 est relié un premier bras secondaire 62a grâce à une liaison pivot ainsi qu'au moins un vérin 63a permettant de contrôler l'angle de rotation de ce premier bras secondaire 62a. La masse d'équilibrage est attaché à ce premier bras secondaire 62a.

De la même manière, à la seconde extrémité de la poutre centrale 61 est relié un second bras secondaire 62b grâce à une liaison pivot ainsi qu'au moins un vérin 63b permettant de contrôler l'angle de rotation de ce second bras secondaire 62b. Puis un troisième bras secondaire 62c comprenant la tête d'impression 2 est relié à l'extrémité du second bras secondaire 62b par une liaison pivot à engrenage cette fois-ci, permettant d'assurer un déplacement horizontal de la tête d'impression.

Les vérins 63a et 63b assurent d'un côté la translation de la tête d'impression sur l'axe H (pour le 63b) et de l'autre le déplacement de la masse d'équilibrage (pour le 63a) permettant de maintenir l'équilibre du premier système de translation 6 et de limiter les perturbations lors de la dépose de matière.

Avantageusement, les moyens de déplacement comprennent également un second système de translation 8 adapté pour déplacer la tête d'impression 2 le long de l'axe vertical V. Celui-ci peut être une poutre ou un rail comme représenté sur les **figures 3 à 5** ou cela peut être un vérin pouvant éventuellement être intégré à l'actionneur ou en-dessous des moyens de fixation de sorte à translater d'un bloc le reste des éléments du dispositif (les gyroscopes 5, les systèmes de translation 6 et 8 et la masse d'équilibrage 7, et la tête d'impression 2) .

La tête d'impression 2 peut alors disposer de trois degrés de liberté :
- une rotation autour de l'axe vertical V assurée par les gyroscopes et éventuellement un actionneur motorisé rotatif (mode de réalisation TDPD1) ;
- une translation selon l'axe H du premier système de translation 6, soit de manière radiale vis-à-vis de l'axe vertical V; et
- une translation selon l'axe vertical V grâce au second système de translation 8.

Les deux premiers degrés de liberté permettent le dépôt d'une couche de matière dans un plan parallèle au plan (P) et le troisième degré permet de relever la tête d'impression 2 de manière à pouvoir déposer une autre couche de matière sur la première dans un autre plan superposé au plan précédent.

Afin d'éviter des déplacements brutaux générateurs de perturbations, les guidages de tubes et de câbles mobiles sont assurées de préférence par des chaînes porte câble, comme représenté par l'élément 12 du dispositif d'impression TDPD1 de la **figure 2****.** Il en est de même pour l'arrivée de la matière telle que pour du mortier ou du béton, ainsi que pour les autres câbles du système.

Selon une option compatible avec les modes de réalisation décrits précédemment, les moyens de stabilisation MS peuvent également comprendre une structure de stabilisation inertielle 9, comme illustré sur la **figure 3****,** permettant d'augmenter la stabilité du dispositif d'impression mobile TDPD2. Avantageusement, cette structure de stabilisation inertielle 9 comprend des atténuateurs de vibrations augmentant encore la stabilité du dispositif d'impression mobile TDPD2 et donc de la tête d'impression 2.

Selon un autre mode de réalisation du dispositif d'impression mobile TDPD0, TDPD1, TDPD2, TDPD3 ou TDPD4, celui-ci peut comprendre de plus :
- des moyens de localisation adaptés pour déterminer en temps réel la position de la tête d'impression 2 dans un repère géométrique propre à la structure à imprimer ; et
- une unité de traitement PU adaptée pour asservir la position de la tête d'impression 2 en fonction de sa localisation dans le repère géométrique de la structure à imprimer.

La localisation de la tête d'impression 2 dans le repère géométrique de la structure à imprimer peut être réalisée de différentes façons.

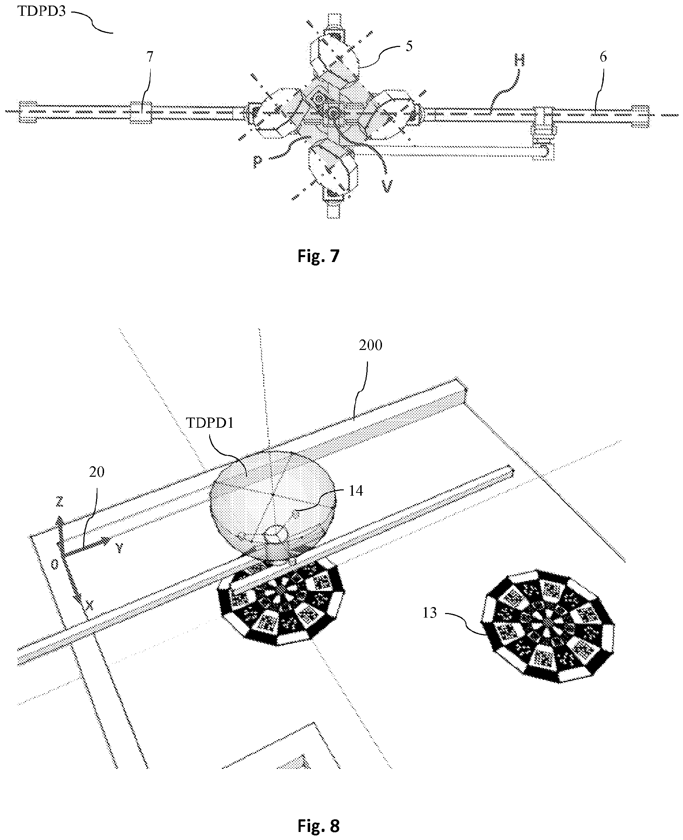

La **figure 8** illustre une solution consistant à utiliser des mires optiques 13 disposées au sol dans le repère 20 de la structure à imprimer 200 et représentant des points de référence dont la position dans le repère géométrique 20 de la structure 200 est déterminée. Selon cette solution, les moyens de localisation de la tête d'impression 2 sont équipés d'au moins une caméra 14 (également visible sur la **figure 2****)** adaptée pour visualiser le sol et détecter les mires optiques 13. Pour des questions de fiabilité, dans les cas où la mire ne serait pas visible sous certains angles, il est souhaitable de mettre en oeuvre une pluralité de caméras. De plus, pour faciliter les calculs de position, il est préférable que les caméras 14 soient fixes et ne tournent pas lors de la rotation la tête d'impression 2.

Ces moyens de localisation comprennent en outre :
- un inclinomètre présentant deux axes adaptés pour mesurer une inclinaison du dispositif d'impression TDPD1 par rapport à un plan perpendiculaire à la verticale (Z), qui correspond à la mesure des angles (ϕ, θ) représentés sur la **figure 9** ; et
- un compas adapté pour mesurer l'angle ψ de rotation autour de la verticale (Z).

L'unité de traitement exploite ensuite les images capturées par la caméra. La position des caméras 14 sur le dispositif TDPD1 étant connue, l'unité de traitement peut, avec les données angulaires (ϕ, θ, ψ), et la position de chaque point de référence dans le repère 20 de la structure à imprimer 200, déterminer la position de la tête d'impression 2 dans ce repère 20. Il est à noter que l'angle ψ mesuré par le compas n'est pas nécessaire pour connaître la position du dispositif TDPD1 dans l'espace, cet angle pouvant être déduit à partir de l'analyse des images de la mire prises par la ou les caméras 14.

Selon une autre solution, la localisation de la tête d'impression 2 peut être réalisée par triangulation. Pour cela, le repère géométrique 20 de la structure à imprimer 200 est repéré au sol à l'aide d'une ou plusieurs balises émettrices ou réceptrices représentant les points de référence, de manière à ce qu'un signal soit émis ou reçu par cette ou ces balises régulièrement et reçu ou émis par les moyens de localisation du dispositif d'impression mobile TDPD2 ou TDPD3, tels qu'un ou plusieurs récepteurs positionnés de manière précise sur la tête d'impression 2 ou sur le dispositif d'impression mobile TDPD2 ou TDPD3. Les moyens de localisation envoient ensuite les informations reçues à l'unité de traitement PU qui assure les calculs pour localiser la tête d'impression 2 dans l'espace de la structure, puis calcule et envoie aux moyens de déplacement (pour les translations) ainsi qu'à l'actionneur (pour la rotation) les consignes de déplacement adaptées au chemin d'impression et donc à la forme de la structure à imprimer 200.

Différentes technologies peuvent être utilisées pour réaliser cette triangulation : les ultrasons, le laser ou encore un système GPS centimétrique. Cependant, les méthodes de triangulation n'offrant pas toujours des mesures suffisamment régulières (par rapport au débit de matière, ou encore par rapport à la vitesse de déplacement de la tête d'impression), il peut être intéressant, voire nécessaire, d'utiliser un système de mesures complémentaires pour émuler une augmentation de la fréquence des mesures et donc la précision de la localisation de la tête d'impression 2 dans le repère de la structure à imprimer 200.

Ainsi, les moyens de localisation peuvent avantageusement comprendre :
- un système de repérage (ex : les mires optiques ou les balises émettrices) adapté pour connaître la position absolue d'au moins un point de référence dans le repère géométrique 20 de la structure à imprimer 200 ; et
- un ensemble de capteurs adaptés pour permettre de localiser la
position de la tête d'impression 2 par rapport au point de référence, l'unité de traitement PU étant adaptée pour calculer la position de la tête d'impression 2 dans le repère géométrique 20 de la structure à imprimer 200 grâce aux données du système de repérage et aux données de l'ensemble des capteurs.

L'ensemble de capteurs pourrait, par exemple, comprendre :
- un capteur adapté pour connaître, à intervalles de temps réguliers, la position absolue de la tête d'impression dans le repère géométrique 20 de la structure à imprimer 200 ; et
- une centrale intertielle adaptée pour mesurer en continu les vitesses et accélérations de la tête d'impression 2 selon trois axes, permettant ainsi l'émulation d'une augmentation de la fréquence des mesures et donc une meilleure précision de localisation de la tête d'impression 2.

Pour compenser toute dérive des mesures qui pourrait survenir, un réajustement sur la ou les positions de référence de la structure à imprimer 200 peut être effectué à intervalles de temps réguliers.

Avantageusement, la tête d'impression 2 est connectée à un tube d'alimentation 10 de matière, telle que des matériaux de construction de type mortier, béton ou ciment, dont l'arrivée 11 se fait parallèlement à l'axe vertical (V), ce qui permet de réduire l'influence de l'arrivée de la matière sur le dispositif d'impression mobile TDPD2 ou TDPD3, comme l'effet de balancement. Sur la **figure 3****,** l'arrivée 11 de matière se fait par le haut du dispositif d'impression mobile TDPD2 alors que sur les **figures 4-6** celle-ci se fait par le bas du dispositif d'impression mobile TDPD3.

De manière à limiter les frottements risquant de faire tourner le dispositif d'impression mobile TDPD2 ou TDPD3 sur lui-même et donc à limiter les perturbations, notamment pour le dépôt de béton, le tube d'alimentation 10 peut être relié à une pompe à béton comprenant un tube de sortie, les deux tubes étant reliés par une combinaison de joints tournants. Avantageusement, la combinaison de joints tournants peut être motorisée de manière à vaincre le frottement induit par de la matière prise entre les deux tubes formant le joint.

Selon une option compatible avec les dispositifs TDPD0, TDPD1, TDPD2, TDPD3 ou TDPD4 précédemment présentés, la tête d'impression 2 peut être munie d'une buse tournante permettant un dépôt non rectiligne du béton. Ce type d'impression en « zigzag » permet de renforcer et rigidifier la structure imprimée.

Pour des questions de sécurité, le dispositif d'impression mobile TDPD0, TDPD1, TDPD2, TDPD3 ou TDPD4, pourra être équipé d'un capteur météorologique mesurant les perturbations extérieures telles que la force du vent. Ces mesures pourront être envoyées à l'unité de traitement PU qui, selon des seuils prédéfinis, pourra arrêter l'asservissement de la tête d'impression 2 et l'impression de la structure 200 afin de se mettre dans un mode « alerte » en cas de danger pour les utilisateurs et personnes environnantes.

Dans le cas où les conditions environnementales présenteraient de fortes perturbations, les moyens de stabilisation peuvent avantageusement comprendre des moyens de stabilisation complémentaire comprenant au moins trois turbines 50 adaptées pour stabiliser la position de la tête d'impression 2 par écoulement d'air.

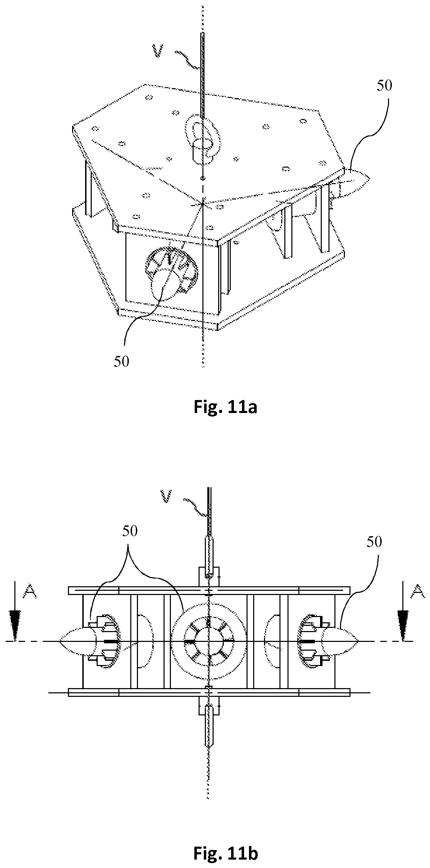

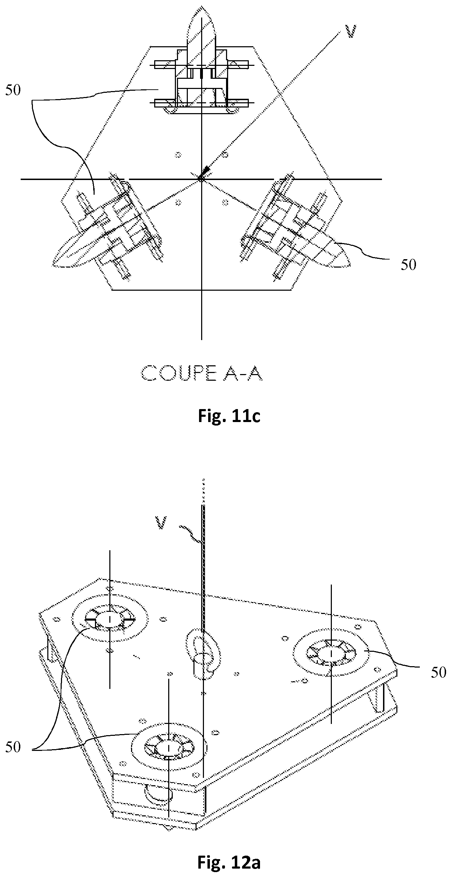

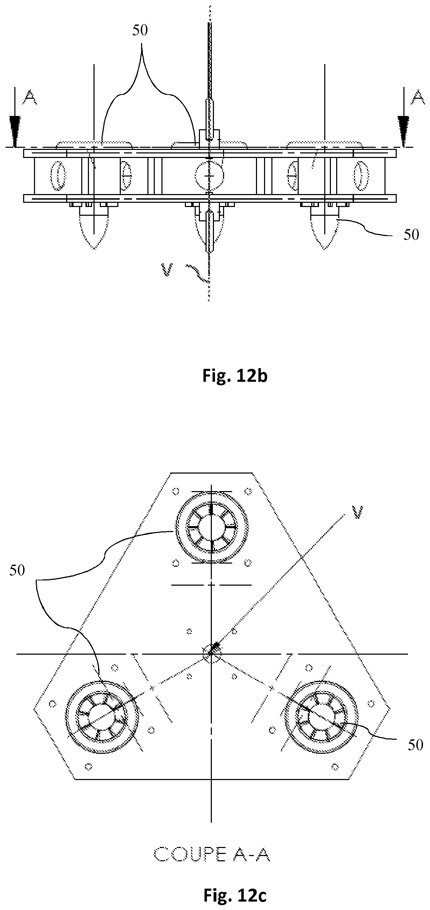

Les **figures 11a à 11c** **et 12a à 12c** représentent deux modes de réalisation des ces moyens de stabilisation complémentaire.

Dans les **figures 11a à 11c****,** les trois turbines 50 sont horizontales et réparties à équidistance angulairement de l'axe de levage ou axe vertical V défini par le câble ou la chaîne unique de levage du dispositif de levage. L'air est aspiré à l'intérieur du triangle défini par les les trois turbines 50 puis expulsé vers l'extérieur de ce triangle.

Dans les **figures 12a à 12c****,** les trois turbines 50 sont verticales et réparties à équidistance angulairement de l'axe de levage ou axe vertical V défini par le câble ou la chaîne unique de levage du dispositif de levage. En fonction du sens dans lequel les moyens de stabilisation complémentaire sont reliés au reste du dispositif d'impression, l'air est aspiré par le haut, c'est-à-dire du côté du câble ou de la chaîne unique de levage (respectivement par le bas, i.e. du côté de la sortie la tête d'impression) par rapport au triangle défini par les les trois turbines 50 puis expulsé vers le bas (respectivement vers le haut).

Quel que soit le mode de réalisation de ces moyens de stabilisation complémentaire, la somme vectorielle des poussées produites par les turbines 50 produira une poussée résultante qui s'opposera aux efforts extérieurs afin de stabiliser le dispositif d'impression 3D mobile TDPD0, TDPD1, TDPD2, TDPD3 ou TDPD4 dans une position définie.

Avantageusement, les dimensions et la masse du dispositif d'impression mobile TDPD0, TDPD1, TDPD2, TDPD3 ou TDPD4, sont compatibles avec celles d'une remorque de transport facilitant ainsi le déplacement d'un chantier à l'autre du dispositif TDPD0, TDPD1, TDPD2, TDPD3 ou TDPD4. Typiquement, la longueur du dispositif sera inférieure à 12 mètres, et la masse inférieure à 1 tonne.

Avantageusement, la forme et les dimensions du dispositif TDPD0, TDPD1, TDPD2, TDPD3 ou TDPD4, sont adaptées pour limiter la prise au vent, donc l'influence des perturbations extérieures, lorsque le dispositif est suspendu, par exemple à une grue de chantier 4, et utilisé en extérieur. Dans le cas où certains éléments du dispositif seraient capotés, comme sur la **figure 2****,** le ou les capots 15 utilisés auront une forme aérodynamique.

La présente invention concerne également un système d'impression 3D pour la construction d'une structure 200 par dépôt de couches de béton comprenant :
- un dispositif d'impression mobile TDPD0, TDPD1, TDPD2, TDPD3 ou TDPD4, selon l'un des modes de réalisation précédemment décrits ; et
- un dispositif de levage LD, de type grue, pont roulant ou en encore chariot de levage télescopique, apte à suspendre et déplacer le dispositif d'impression mobile 3D TDPD0, TDPD1, TDPD2, TDPD3 ou TDPD4.

Pour des questions de sécurité, lorsque les perturbations extérieures mesurées par le capteur météorologique dépasseront des seuils prédéfinis provoquant l'arrêt de l'asservissement de la tête d'impression 2 et de l'impression de la structure 200, le dispositif de levage LD pourra placer le dispositif d'impression mobile TDPD0, TDPD1, TDPD2, TDPD3 ou TDPD4, dans une configuration de sécurité telle que la configuration « drapeau », où le dispositif TDPD0, TDPD1, TDPD2, TDPD3 ou TDPD4, se trouvera naturellement orienté dans le sens du vent de manière à en limiter ses effets sur le dispositif.

La présente invention concerne également un procédé d'impression 3D d'une structure en béton par un système d'impression 3D tel que décrit précédemment, comprenant :
- une première étape consistant à définir au moins un point et une direction de référence dans le repère géométrique de la structure à imprimer à l'aide d'un système de repérage et une direction, et à localiser la position de la tête d'impression 2 du dispositif d'impression TDPD0, TDPD1, TDPD2, TDPD3 ou TDPD4, dans le repère géométrique de la structure à imprimer ; et
- une seconde étape d'impression de la structure consistant à alimenter la tête d'impression 2 en matériaux de construction, de type béton, mortier ou ciment, et à activer l'asservissement de la position de la tête d'impression 2 par l'unité de traitement PU en fonction de la forme de la structure à imprimer 200.

Avantageusement, l'asservissement de la tête d'impression 2 comprend le dépôt d'une première couche de matériau selon un plan perpendiculaire à l'axe vertical V, l'unité de traitement PU pilotant les positions angulaire et radiale (soit selon le premier système de translation 6) de la tête d'impression 2 par rapport à l'axe vertical V par envoi de consignes adaptées à l'actionneur et aux moyens de déplacement du dispositif d'impression mobile TDPD0, TDPD1, TDPD2, TDPD3, TDPD4.

Avantageusement, l'asservissement de la tête d'impression 2 comprend également au moins un déplacement de la tête d'impression 2 selon l'axe vertical V de manière à pouvoir procéder au dépôt d'une nouvelle couche de matériau sur la précédente couche de matériau déposée.

De manière à pouvoir imprimer une structure dont l'envergure est plus grande que le déplacement autorisé de la tête d'impression 2 par l'actionneur et les moyens de déplacement du dispositif d'impression mobile TDPD0, TDPD1, TDPD2, TDPD3 ou TDPD4, le procédé peut comprendre en outre au moins une étape supplémentaire de déplacement du dispositif d'impression mobile TDPD0, TDPD1, TDPD2, TDPD3 ou TDPD4 par le dispositif de levage LD entre deux dépôts de couche de matériau.

Enfin, la présente invention concerne également un logiciel d'impression 3D adapté pour coordonner les étapes de dépôt de matériau du procédé d'impression 3D tel que défini précédemment de manière à ce que l'impression de la structure 200 puisse reprendre à la position où se trouvait la tête d'impression 2 avant le déplacement du dispositif d'impression mobile TDPD0, TDPD1, TDPD2, TDPD3 ou TDPD4, par le dispositif de levage LD entre deux dépôts de couche de matériau.

La description et les dessins illustrent simplement les principes de l'invention. On comprendra ainsi que l'homme du métier sera capable de concevoir diverses variantes qui, bien que non explicitement décrites ou illustrées ici, incorporent les principes de l'invention. En outre, tous les exemples cités ici sont principalement destinés à des fins pédagogiques pour aider le lecteur à comprendre les principes de l'invention et les concepts apportés par l'inventeur à l'art antérieur et doivent être interprétés comme étant sans limitation à ces exemples et conditions spécifiquement cités. Par ailleurs, toutes les déclarations dans lesquelles des principes, aspects et modes de réalisation de l'invention, ainsi que des exemples spécifiques de ceux-ci, sont censés englober des équivalents de ceux-ci.

### LISTE DES NUMÉROS DE RÉFÉRENCE

TDPD0 Dispositif d'impression mobile selon un mode général de réalisation de l'invention (*Three-Dimensional Printing Device*)
TDPD1 Dispositif d'impression mobile selon une première variante du mode général de réalisation de l'invention (*Three-Dimensional Printing Device*)
TDPD2 Dispositif d'impression mobile selon une deuxième variante du mode général de réalisation de l'invention (*Three-Dimensional Printing Device)*
TDPD3 Dispositif d'impression mobile selon une troisième variante du mode général de réalisation de l'invention (*Three-Dimensional Printing Device*)
TDPD4 Dispositif d'impression mobile selon une quatrième variante du mode général de réalisation de l'invention (*Three-Dimensional Printing Device*)
LD Dispositif de levage (*Lifting Means*)
MS Moyens de Stabiliation (*Means of Stabilization*)
PU Unité de Traitement (*Process Unit*)
2 Tête d'impression
3 Moyens de fixation
4 Crochet de grue
5 Gyroscope
6 Premier système de translation
6a première poutre rectiligne du premier système de translation
6b seconde poutre rectiligne du premier système de translation
7 Masse d'équilibrage
8 Second système de translation
9 Structure de stabilisation inertielle
10 Tube d'alimentation de matière
11 Arrivée de la matière
12 chaîne porte câble
13 Mire optique
14 Caméra
15 Capot
20 Repère géométrique de la structure à imprimer
50 Turbine
61 Poutre centrale
62 Bras secondaire
63 Vérin
200 Structure à imprimer

## Revendications

1. Dispositif d'impression 3D mobile (TDPDO, TDPD1, TDPD2, TDPD3, TDPD4) par ajout de matière destiné à être accroché à un dispositif de levage (LD) à câble ou chaîne unique de levage , le dispositif d'impression 3D mobile (TDPDO, TDPD1, TDPD2, TDPD3, TDPD4) comprenant :
- une tête d'impression (2) adaptée pour recevoir de la matière et la déposer ;
- des moyens de fixation (3) adaptés pour relier la tête d'impression (2) au dispositif de levage (LD), incluant en outre
- des moyens de stabilisation (MS) adaptés pour stabiliser la position de la tête d'impression (2) par effet gyroscopique, **caractérisé en ce que** les moyens de stabilisation (MS) comprennent au moins trois gyroscopes (5), adaptés pour stabiliser la position de la tête d'impression (2) par effet gyroscopique, et **en ce que** le dispositif comprend en outre
- un actionneur adapté pour faire tourner la tête d'impression (2) autour d'un axe de rotation, dit vertical (V), perpendiculaire au plan défini par les trois gyroscopes (5), les moyens de stabilisation étant en outre adaptés pour compenser les perturbations générées par la rotation de la tête d'impression et assurer la stabilité de la tête d'impression pendant la rotation.

2. Dispositif d'impression 3D mobile (TDPDO, TDPD1, TDPD2, TDPD3, TDPD4) selon la revendication 1, dans lequel les moyens de stabilisation (MS) sont adaptés pour agir sur la position des moyens de fixations (3).

3. Dispositif d'impression 3D mobile (TDPDO, TDPD1, TDPD2, TDPD3, TDPD4) selon l'une des revendications 1 à 2, dans lequel les moyens de stabilisation (MS) comprennent des moyens de stabilisation complémentaire (MSC) comprenant au moins trois turbines adaptées pour stabiliser la position de la tête d'impression (2) par écoulement d'air, les trois turbines étant réparties à équidistance angulairement d'un axe de levage sensiblement vertical (V) défini par le câble ou la chaîne unique de levage du dispositif de levage (LD).

4. Dispositif d'impression 3D mobile (TDPD1, TDPD2, TDPD3, TDPD4) selon la revendication 1 incluant en outre des moyens de déplacement comprenant un premier système de translation (6) adapté pour déplacer la tête d'impression (2) le long d'un axe (H) perpendiculaire à l'axe vertical (V).

5. Dispositif d'impression 3D mobile (TDPD4) selon la revendication 4 dans lequel le premier système de translation (6) comprend un bras articulé permettant le déplacement de la tête d'impression (2) le long de l'axe (H) perpendiculaire à l'axe vertical (V).

6. Dispositif d'impression 3D mobile (TDPD1, TDPD2, TDPD3, TDPD4) selon l'une des revendications 4 ou 5, dans lequel le premier système de translation (6) comprend une masse d'équilibrage (7) adaptée pour maintenir l'équilibre du premier système de translation (6) en fonction de la position de la tête d'impression (2) sur l'axe (H) du premier système de translation (6).

7. Dispositif d'impression 3D mobile (TDPD1, TDPD2, TDPD3) selon l'une quelconque des revendications 4 à 6, dans lequel les moyens de déplacement comprennent en outre un second système de translation (8) adapté pour déplacer la tête d'impression (2) le long de l'axe vertical (V).

8. Dispositif d'impression 3D mobile (TDPDO, TDPD1, TDPD2, TDPD3, TDPD4) selon l'une quelconque des revendications 1 à 7, comprenant en outre :
- des moyens de localisation adaptés pour déterminer en temps réel la position de la tête d'impression (2) dans un repère géométrique (20) propre à la structure à imprimer (200) ; et
- une unité de traitement adaptée pour asservir la position de la tête d'impression (2) en fonction de sa localisation dans le repère géométrique (20) de la structure à imprimer (200).

9. Dispositif d'impression 3D mobile (TDPDO, TDPD1, TDPD2, TDPD3, TDPD4) selon la revendication 8, dans lequel les moyens de localisation comprennent :
- un système de repérage adapté pour connaître la position absolue d'un point de référence dans le repère géométrique (20) de la structure à imprimer (200) ; et
- un ensemble de capteurs adaptés pour permettre de localiser la position de la tête d'impression (2) par rapport au point de référence, l'unité de traitement étant adaptée pour calculer la position de la tête d'impression (2) dans le repère géométrique (20) de la structure à imprimer (200) grâce aux données du système de repérage et aux données de l'ensemble des capteurs.

10. Dispositif d'impression 3D mobile (TDPDO, TDPD1, TDPD2, TDPD3, TDPD4) selon l'une quelconque des revendications 1 à 9, dans lequel la tête d'impression (2) est connectée à un tube d'alimentation de matière, dont l'arrivée se fait selon l'axe vertical (V).

11. Dispositif d'impression 3D mobile (TDPDO, TDPD1, TDPD2, TDPD3, TDPD4) selon la revendication 10, dans lequel le tube d'alimentation de matière (10) est relié à une pompe à matériaux comprenant un tube de sortie, les deux tubes étant reliés par une combinaison de joints tournants.

12. Dispositif d'impression 3D mobile (TDPDO, TDPD1, TDPD2, TDPD3, TDPD4) selon l'une quelconque des revendications 1 à 11 dans lequel la tête d'impression (2) est munie d'une buse tournante permettant un dépôt non rectiligne de la matière.

13. Système d'impression 3D pour la construction d'une structure par dépôt de couches de matière comprenant :
- un dispositif d'impression 3D mobile (TDPDO, TDPD1, TDPD2, TDPD3, TDPD4) selon l'une quelconque des revendications 1 à 12 ; et
- un dispositif de levage (LD) à câble ou chaîne unique de levage, le dispositif de levage (LD) étant apte à suspendre et déplacer le dispositif d'impression 3D (TDPDO, TDPD1, TDPD2, TDPD3, TDPD4).

14. Procédé d'impression 3D d'une structure telle qu'un bâtiment par un système d'impression 3D selon la revendication 13, comprenant :
• une première étape consistant à définir, à l'aide d'un système de repérage, au moins un point de référence dans le repère géométrique (20) de la structure à imprimer (200), de sorte que l'unité de traitement puisse définir la position de la tête d'impression (2) dans le repère géométrique (20) de la structure à imprimer (200) ; et
• une seconde étape d'impression de la structure consistant à alimenter la tête d'impression (2) en matériaux de construction, de type béton, mortier ou ciment, et à activer l'asservissement de la position de la tête d'impression (2) par l'unité de traitement en fonction de la forme de la structure à imprimer (200).

## Patentansprüche

1. Mobile 3D-Druckvorrichtung (TDPDO, TDPD1, TDPD2, TDPD3, TDPD4) durch Hinzufügen von Material, das dazu bestimmt ist, an einer Hebevorrichtung (LD) mit einem einzelnen Hubseil oder einer einzelnen Hubkette befestigt zu werden, wobei die mobile 3D-Druckvorrichtung (TDPDO, TDPD1, TDPD2, TDPD3, TDPD4) Folgendes umfasst:
- einen Druckkopf (2), der angepasst ist, um Material aufzunehmen und abzulegen;
- Befestigungsmittel (3), die angepasst sind, um den Druckkopf (2) mit der Hebevorrichtung (LD) zu verbinden, ferner einschließend
- Stabilisierungsmittel (MS), die angepasst sind, die Position des Druckkopfs (2) durch gyroskopischen Effekt zu stabilisieren, **dadurch gekennzeichnet, dass** die Stabilisierungsmittel (MS) mindestens drei Gyroskope (5) umfassen, die angepasst sind, um die Position des Druckkopfs (2) durch gyroskopischen Effekt zu stabilisieren, **und dass** die Vorrichtung ferner umfasst
- einen Aktuator, der angepasst ist, um den Druckkopf (2) um eine vertikale Drehachse (V) zu drehen, die senkrecht zu der Ebene ist, die durch die drei Gyroskope (5) definiert ist, wobei die Stabilisierungsmittel ferner angepasst sind, um die durch die Drehung des Druckkopfs erzeugten Störungen zu kompensieren und die Stabilität des Druckkopfs während der Drehung zu gewährleisten.

2. Mobile 3D-Druckvorrichtung (TDPDO, TDPD1, TDPD2, TDPD3, TDPD4) nach Anspruch 1, wobei die Stabilisierungsmittel (MS) angepasst sind, um auf die Position der Befestigungsmittel (3) einzuwirken.

3. Mobile 3D-Druckvorrichtung (TDPDO, TDPD1, TDPD2, TDPD3, TDPD4) nach einem der Ansprüche 1 bis 2, wobei die Stabilisierungsmittel (MS) komplementäre Stabilisierungsmittel (MSC) umfassen, die mindestens drei Turbinen umfassen, die angepasst sind, um die Position des Druckkopfs (2) durch einen Luftstrom zu stabilisieren, wobei die drei Turbinen im gleichen Winkelabstand von einer im Wesentlichen vertikalen Hubachse (V) verteilt sind, die durch das einzelne Hubseil oder die einzelne Hubkette der Hebevorrichtung (LD) definiert ist.

4. Mobile 3D-Druckvorrichtung (TDPD1, TDPD2, TDPD3, TDPD4) nach Anspruch 1, ferner einschließend Verschiebemittel, die ein erstes Translationssystem (6) umfassen, das angepasst ist, um den Druckkopf (2) entlang einer Achse (H), die senkrecht zu der vertikalen Achse (V) ist, zu verschieben.

5. Mobile 3D-Druckvorrichtung (TDPD4) nach Anspruch 4, wobei das erste Translationssystem (6) einen Gelenkarm umfasst, der die Verschiebung des Druckkopfs (2) entlang der Achse (H), die senkrecht zur vertikalen Achse (V) ist, ermöglicht.

6. Mobile 3D-Druckvorrichtung (TDPD1, TDPD2, TDPD3, TDPD4) nach einem der Ansprüche 4 oder 5, wobei das erste Translationssystem (6) einen Massenausgleich (7) umfasst, der angepasst ist, um das Gleichgewicht des ersten Translationssystems (6) in Abhängigkeit von der Position des Druckkopfs (2) auf der Achse (H) des ersten Translationssystems (6) aufrechtzuerhalten.

7. Mobile 3D-Druckvorrichtung (TDPD1, TDPD2, TDPD3) nach einem der Ansprüche 4 bis 6, wobei die Verschiebemittel ferner ein zweites Translationssystem (8) umfassen, das angepasst ist, um den Druckkopf (2) entlang der vertikalen Achse (V) zu verschieben.

8. Mobile 3D-Druckvorrichtung (TDPDO, TDPD1, TDPD2, TDPD3, TDPD4) nach einem der Ansprüche 1 bis 7, ferner umfassend:
- Lokalisierungsmittel, die angepasst sind, um in Echtzeit die Position des Druckkopfs (2) in einem geometrischen Passer (20) zu bestimmen, der für die zu druckende Struktur (200) spezifisch ist; und
- eine Verarbeitungseinheit, die angepasst ist, um die Position des Druckkopfs (2) in Abhängigkeit von seiner Lokalisierung in dem geometrischen Passer (20) der zu druckenden Struktur (200) zu steuern.

9. Mobile 3D-Druckvorrichtung (TDPDO, TDPD1, TDPD2, TDPD3, TDPD4) nach Anspruch 8, wobei die Lokalisierungsmittel umfassen:
- ein Standortbestimmungssystem, das angepasst ist, um die absolute Position eines Referenzpunkts in dem geometrischen Passer (20) der zu druckenden Struktur (200) zu erkennen; und
- eine Anordnung von Sensoren, die angepasst sind, um die Position des Druckkopfs (2) relativ zum Referenzpunkt zu lokalisieren,
wobei die Verarbeitungseinheit angepasst ist, um die Position des Druckkopfs (2) in dem geometrischen Passer (20) der zu druckenden Struktur (200) anhand der Daten des Standortbestimmungssystems und der Daten der Gesamtheit der Sensoren zu berechnen.

10. Mobile 3D-Druckvorrichtung (TDPDO, TDPD1, TDPD2, TDPD3, TDPD4) nach einem der Ansprüche 1 bis 9, wobei der Druckkopf (2) mit einem Materialzufuhrrohr verbunden ist, dessen Aufnahme entlang der vertikalen Achse (V) erfolgt.

11. Mobile 3D-Druckvorrichtung (TDPDO, TDPD1, TDPD2, TDPD3, TDPD4) nach Anspruch 10, wobei das Materialzufuhrrohr (10) mit einer Materialpumpe verbunden ist, die ein Abgaberohr umfasst, wobei die beiden Rohre durch eine Kombination von Drehgelenken verbunden sind.

12. Mobile 3D-Druckvorrichtung (TDPDO, TDPD1, TDPD2, TDPD3, TDPD4) nach einem der Ansprüche 1 bis 11, wobei der Druckkopf (2) mit einer Drehdüse versehen ist, die eine nicht geradlinige Materialabgabe ermöglicht.

13. 3D-Drucksystem zum Aufbau einer Struktur durch Abscheidung von Materialschichten, umfassend:
- eine mobile 3D-Druckvorrichtung (TDPDO, TDPD1, TDPD2, TDPD3, TDPD4) nach einem der Ansprüche 1 bis 12; und
- eine Hebevorrichtung (LD) mit einem einzigen Hubseil oder einer einzigen Hubkette, wobei die Hebevorrichtung (LD) in der Lage ist, die 3D-Druckvorrichtung (TDPDO, TDPD1, TDPD2, TDPD3, TDPD4) aufzuhängen und zu verschieben.

14. Verfahren zum 3D-Drucken einer Struktur wie eines Gebäudes durch ein 3D-Drucksystem nach Anspruch 13, umfassend:
• einen ersten Schritt, der darin besteht, mit Hilfe eines Standortbestimmungssystems mindestens einen Referenzpunkt in dem geometrischen Passer (20) der zu druckenden Struktur (200) zu definieren, so dass die Verarbeitungseinheit die Position des Druckkopfs (2) in dem geometrischen Passer (20) der zu druckenden Struktur (200) definieren kann; und
• einen zweiten Schritt des Druckens der Struktur, der darin besteht, den Druckkopf (2) mit Baumaterialien vom Typ Beton, Mörtel oder Zement zu versorgen und in Abhängigkeit von der Form der zu druckenden Struktur (200) die Steuerungsvorrichtung der Position des Druckkopfs (2) durch die Verarbeitungseinheit zu aktivieren.

## Claims

1. A mobile 3D printing device (TDPDO, TDPD1, TDPD2, TDPD3, TDPD4) by adding material intended to be attached to a lifting device (LD) with a single lifting cable or chain, the mobile 3D printing device (TDPDO, TDPD1, TDPD2, TDPD3, TDPD4) comprising :
- a printing head (2) adapted to receive material and depositing it;
- fixing means (3) adapted to link the printing head (2) to the lifting device (LD),
including in addition
- stabilization means (MS) adapted to stabilize the position of the printing head (2) by gyroscopic effect, **characterised in that** the stabilization means (MS) comprise at least three gyroscopes (5), adapted to stabilise the position of the printing head (2) by gyroscopic effect, and **in that** the device further comprises
- an actuator adapted to rotate the printing head (2) about an axis of rotation, known as the vertical axis (V), perpendicular to the plane defined by the three gyroscopes (5), the stabilization means being further adapted to compensate for the disturbances generated by the rotation of the printing head and to ensure the stability of the printing head during the rotation.

2. Mobile 3D printing device (TDPDO, TDPD1, TDPD2, TDPD3, TDPD4) according to claim 1, wherein the stabilization means (MS) are adapted to act on the position of the fixing means (3).

3. Mobile 3D printing device (TDPDO, TDPD1, TDPD2, TDPD3, TDPD4) according to one of claims 1 to 2, wherein the stabilization means (MS) comprise complementary stabilization means (MSC) comprising at least three turbines adapted to stabilise the position of the printing head (2) by air flow, the three turbines being distributed at an angular equidistance from a substantially vertical lifting axis (V) defined by the single lifting cable or chain of the lifting device (LD).

4. Mobile 3D printing device (TDPD1, TDPD2, TDPD3, TDPD4) according to claim 1 further including displacement means comprising a first translation system (6) adapted to move the printing head (2) along an axis (H) perpendicular to the vertical axis (V).

5. Mobile 3D printing device (TDPD4) according to claim 4 in which the first translation system (6) comprises an articulated arm allowing the printing head (2) to move along the axis (H) perpendicular to the vertical axis (V).

6. Mobile 3D printing device (TDPD1, TDPD2, TDPD3, TDPD4) according to one of claims 4 or 5, wherein the first translation system (6) comprises a balancing mass (7) adapted to maintain the equilibrium of the first translation system (6) as a function of the position of the printing head (2) on the axis (H) of the first translation system (6).

7. Mobile 3D printing device (TDPD1, TDPD2, TDPD3) according to any one of claims 4 to 6, wherein the displacement means further comprises a second translation system (8) adapted to move the printing head (2) along the vertical axis (V).

8. Mobile 3D printing device (TDPDO, TDPD1, TDPD2, TDPD3, TDPD4) according to any one of claims 1 to 7, further comprising:
- locating means adapted to determine in real time the position of the printing head (2) in a geometrical reference frame (20) specific to the structure to be printed (200); and
- a processing unit adapted to servo-control the position of the printing head (2) as a function of its location in the geometrical reference frame (20) of the structure to be printed (200).

9. Mobile 3D printing device (TDPDO, TDPD1, TDPD2, TDPD3, TDPD4) according to claim 8, wherein the locating means comprises :
- a spotting system adapted to know the absolute position of a reference point in the geometrical reference frame (20) of the structure to be printed (200); and
- a set of sensors adapted to enable the position of the printing head (2) to be located with respect to the reference point,
the processing unit being adapted to calculate the position of the printing head (2) in the geometrical marker (20) of the structure to be printed (200) using the data from the spotting system and the data from the set of sensors.

10. Mobile 3D printing device (TDPDO, TDPD1, TDPD2, TDPD3, TDPD4) according to any one of claims 1 to 9, wherein the printing head (2) is connected to a material supply tube, the arrival of which being made along the vertical axis (V).

11. Mobile 3D printing device (TDPDO, TDPD1, TDPD2, TDPD3, TDPD4) according to claim 10, wherein the material supply tube (10) is linked to a material pump comprising an output tube, the two tubes being linked by a combination of revolving joints.

12. Mobile 3D printing device (TDPDO, TDPD1, TDPD2, TDPD3, TDPD4) according to any one of claims 1 to 11 in which the printing head (2) is provided with a revolving nozzle allowing for a non-rectilinear deposition of the material.

13. A 3D printing system for building a structure by the deposition of layers of material comprising :
- a mobile 3D printing device (TDPDO, TDPD1, TDPD2, TDPD3, TDPD4) according to any of claims 1 to 12; and
- a lifting device (LD) with a single lifting cable or chain, the lifting device (LD) being able to suspend and move the 3D printing device (TDPDO, TDPD1, TDPD2, TDPD3, TDPD4).

14. A method of 3D printing a structure such as a building by a 3D printing system according to claim 13, comprising:
• a first step consisting of defining, using a spotting system, at least one reference point in the geometrical reference frame (20) of the structure to be printed (200), so that the processing unit can define the position of the printing head (2) in the geometrical reference frame (20) of the structure to be printed (200); and
• a second step of printing the structure consisting of supplying the printing head (2) with construction materials, such as concrete, mortar or cement, and in activating the servo-control of the position of the printing head (2) by the processing unit according to the shape of the structure to be printed (200).
